# EUROPÄISCHE PATENTSCHRIFT

(11) **EP 4 227 161 B1**
(45) Veröffentlichungstag und Bekanntmachung des Hinweises auf die Patenterteilung: **26.11.2025**
(21) Anmeldenummer: 23154686.2
(22) Anmeldetag: 02.02.2023
(51) Int. Cl.: B60R 9/045

(54) **HECKLASTENTRÄGER**
REAR LOAD CARRIER
PORTE-CHARGE ARRIÈRE

(30) Priorität: 15.02.2022 DE 202022100833 U
(43) Veröffentlichungstag der Anmeldung: 16.08.2023
(73) Patentinhaber: Jopindo GmbH, 61352 Bad Homburg v.d. H. (DE)
(72) Erfinder: SAILER, Wolgang, 6290 Maryrhofen (AT)
(74) Vertreter: ERNICKE Patent- und Rechtsanwälte PartmbB

(56) Entgegenhaltungen:
- WO-A1-03/039913
- DE-A1- 19 521 886
- DE-U1- 202019 103 944
- JP-A- H08 282 389

## Beschreibung

Die Erfindung betrifft einen Hecklastenträger mit den Merkmalen im Oberbegriff des Hauptanspruchs.

Die WO 2003/39913 A1 zeigt einen Hecklastenträger mit einem Basisteil, nach dem Oberbegriff von Anspruch 1, das einen Tragbalken mit zwei manuell schwenkbaren und mit Höhenversatz übereinander am Tragbalken angeordneten Stützarmen umfasst. Der Tragbalken und die Stützarme sind innerhalb eines hohlen hinteren Stossfängers angeordnet. An den aus dem hohlen Stossfänger ausgeschwenkten Stützarmen kann ein Trägerteil aufgesteckt werden, das für einen freien Heckzugang abgenommen wird.

Bei anderen gezeigten Varianten ist der Tragbalken mit den Stützarmen unterhalb des hinteren Stossfängers angeordnet.

Ein anderer Hecklastenträger ist aus der DE 20 2019 102 152 U1 bekannt. Das Basisteil mit einem Gehäuse und darin angeordneten schwenkbaren Stützarmen wird am Fahrzeugheck verborgen in der Fahrzeugkarosserie fest montiert. Die Stützarme sind in eingeschwenkter Nichtgebrauchsstellung im Gehäuse geschützt angeordnet. Sie sind dabei an einer Hubbrücke höhenverstellbar angeordnet und gelagert. Sie können aus dem Gehäuse durch eine vertikale Hubbewegung nach unten aus einer unteren Gehäuseöffnung ausgefahren werden und außerhalb des Gehäuses in die Gebrauchsstellung ausgeschwenkt werden. Die Betätigung und der Antrieb der Stützarme erfolgen jeweils durch einen eigenen Antriebsmotor. In der Gebrauchsstellung kann ein Trägerteil, z.B. ein Fahrradträger oder eine Tragbox, an den ausgeschwenkten Stützarmen lösbar aufgesteckt werden. Für einen freien Zugang zum Fahrzeugheck wird das Trägerteil abgenommen.

Die DE 10 2014 016 195 A1 befasst sich mit einem Hecklastenträger, der einen im Fahrzeugheck verborgen montierten höhenverstellbaren Tragbalken mit zwei motorisch schwenkbaren Stützarmen umfasst, die in der Nichtgebrauchsstellung mit Höhenversatz übereinander angeordnet sind, wobei eines der Schwenklager eine Höhenverstellung aufweist, mit der die Stützarme in der ausgeschwenkten Gebrauchsstellung auf gleiche Höhe gebracht werden. An den ausgeklappten Tragarmen kann ein Trägerteil lösbar montiert werden, das für einen freien Zugang zum Fahrzeugheck abgenommen wird.

Die DE 10 2007 014 618 A1 und DE 10 2010 045 356 A1 zeigen Fahrradträger, die am Fahrzeug mittels einer Anhängerkupplung oder heckseitig abstehenden Stützarmen angekuppelt werden können, wobei deren Fahrradaufnahmen um eine Querachse vom Fahrzeugheck weggeklappt werden können, um eine dortige Heckklappe öffnen zu können.

Die JP H08-175276 A lehrt einen ausziehbaren bzw. spreizbaren Falttragrahmen an einem Fahrzeugheck, auf dem eine teleskopierbare Trägerplattform fest montiert ist, die wiederum eine Transportkiste oder eine andere Last trägt. Der Falttragrahmen weist eine fahrzeugfeste Stützstange in einer rückseitig permanent offenen Abdeckung und an der Stützstange linear verfahrbare Schwenkarme auf, die am anderen Ende gelenkig mit einem Tragbalken quer verbunden sind, auf welchem die teleskopierbare Trägerplattform fest montiert ist. In einer anderen Variante ist statt des Falttragrahmens ein starrer rechteckiger Tragrahmen mit einer umgebenden Abdeckung vorgesehen, der schwenkbar in einer permanent offenen U-Schiene am Fahrzeugheck montiert ist und auf dem die Trägerplattform befestigt ist.

Die JP H08-282389 A zeigt ebenfalls einen ausziehbaren Falttragrahmen der vorgenannten Art an einem Fahrzeugheck, wobei in der Auszugstellung auf distanzierten Querbalken des Falttragrahmens jeweils Stützstreben angeklemmt werden, die einerseits den ausgezogenen Falttragrahmen und die Querbalkenstellung stabilisieren und am Einknicken hindern sowie andererseits eine Last aufnehmen.

Aus der EP 3 725 593 A1 ist eine Tragplattform für auflegbare Lasten bekannt, die an stationären Aufnahmerohren am Fahrzeug oder an einer Anhängekupplung lösbar angesteckt werden kann. In anderen Ausführungsformen ist die Tragplattform dauerhaft mit dem Fahrzeug verbunden. Sie kann dabei an einem quer zur hinteren Stoßstange in einer Stützschiene verschiebbaren Schlitten schwenkbar gelagert sein oder kann ihrerseits an oder auf einem Tragarm verschieblich gelagert sein, welcher schenkbar am Ende der permanent offenen fahrzeugfesten Stützschiene angeordnet ist. Ein anderer Tragarm ist dabei starr mit der aufgelegten Tragplattform verbunden. Dieser Tragarm ist mit seinem freien Ende an der Stützschiene verschieblich und entfernbar gelagert oder ist mit einem Gelenkträger schwenkbar verbunden.

Die EP 2 543 549 A1 befasst sich mit losen gebogenen Stützarmen, die am einen Ende jeweils in eine einzelne offene und fahrzeugfeste Traghülse lösbar eingesteckt werden können und die am anderen Ende mit einem Trägerteil, z.B. einem Fahrradträger, gekuppelt werden können.

Es ist Aufgabe der vorliegenden Erfindung, einen besser nutzbaren Hecklastenträger aufzuzeigen.

Die Erfindung löst diese Aufgabe mit den Merkmalen in den selbstständigen Ansprüchen.

Der beanspruchte Hecklastenträger und das damit ausgerüstete Kraftfahrzeug haben verschiedene Vorteile.

Der beanspruchte Hecklastenträger lässt sich besser und einfacher bedienen. Er erfordert einen geringeren und einfacheren Bauaufwand. Die Stützarme können aus dem eigenen Gehäuse des Basisteils durch eine rückwärtige Gehäuseöffnung ausgeschwenkt werden. Sie brauchen keine Höhenverstellung. Das Basisteil mit dem Gehäuse kann außenseitig am Kraftfahrzeug angebaut werden, wobei die verschließbare Gehäuseöffnung und die dahinter angeordneten Stützarme für einen Bediener ohne Aufwand zugänglich sind. Der Bediener kann die Stützarme manuell ausschwenken. Ein eigener Schwenkantrieb der Stützarme ist entbehrlich, wobei er auf Wunsch aber vorhanden sein kann.

Die schwenkbaren Stützarme sind für die lösbare Aufnahme und Befestigung eines auf den Stützarmen aufzusteckenden, Trägerteils ausgebildet. Die Stützarme können einzeln und unabhängig voneinander geschwenkt werden. Sie haben eine bevorzugt gerade Erstreckung und freie Enden, an denen das Trägerteil lösbar aufgesteckt werden kann.

Die Stützarme können zwischen einer eingeklappten Nichtgebrauchsstellung im Gehäuse und einer ausgeklappten Gebrauchsstellung geschwenkt werden, wobei die Stützarme in der Gebrauchsstellung gegen die Vorwärtsfahrtrichtung rückwärts durch die verschließbare Gehäuseöffnung aus dem Gehäuse ragen. In der Gebrauchsstellung kann das Trägerteil auf den Stützarmen aufgesteckt und lösbar befestigt werden. In der Nichtgebrauchsstellung sind die vom Trägerteil gelösten Stützarme im Gehäuse auf gleicher Höhe und in Fahrtrichtung hintereinander angeordnet.

Der beanspruchte Hecklastenträger ermöglicht auch einen besseren und komfortableren Zugang zum Fahrzeugheck und einer dortigen Hecktüre oder Heckklappe. Das Gehäuse mit den darin angeordneten Stützarmen kann an einem Grundträger des Basisteils beweglich, insbesondere schwenkbar, gelagert sein. Dies ermöglicht es, im Bedarfsfall das Gehäuse mit den ggf. ausgeschwenkten Stützarmen und mit einem dort ggf. montierten, insbesondere angesteckten, Trägerteil vom Fahrzeugheck auf einfache Weise wegzubewegen und dadurch einen freien Heckzugang zu ermöglichen. Der Grundträger kann am Kraftfahrzeug fest montiert werden. Er verbleibt in seiner Position und stützt das wegbewegbare Gehäuse nebst Stützarmen und montiertem Trägerteil am Fahrzeug ab. Der Grundträger kann über bevorzugt endseitige Beschläge an geeigneten Stützstellen der Fahrzeugkarosserie, z.B. an den Enden von Fahrzeuglängsträgern, befestigt werden.

Der beanspruchte Hecklastenträger und insbesondere dessen Basisteil hat den Vorteil einer einfachen, robusten und kostengünstigen Bauform und einer vereinfachten Kinematik. Das Basisteil kann eine balkenartige, schlanke Form haben und kann am Fahrzeugheck ohne signifikanten Störeinfluss montiert werden. Es kann in Vorwärtsfahrtrichtung gesehen unterhalb oder hinter einem Heckstoßfänger des Kraftfahrzeugs, z.B. einer Heckstoßstange, montiert werden. Das Basisteil kann auch statt eines Heckstoßfängers am Fahrzeugheck angebracht werden und kann diesen ersetzen. Durch diese Anbaumöglichkeiten ist der freie rückwärtige Zugang zum Basisteil und seinen Stützarmen gewährleistet. Andererseits ist diese Anordnung des Basisteils auch vorteilhaft für die vorgenannte bewegliche Lagerung am Grundträger und die Wegbewegungsmöglichkeit für einen freien Heckzugang.

Der Heckträger und das Basisteil eignen sich besonders für Kraftfahrzeuge in Form von Kastenwägen oder auch von Vans oder Kleinbussen, die ein oder mehrere Hecktüren und/oder eine Heckklappe aufweisen. Solche Kastenwagen, Vans oder Kleinbusse können als gewerbliche Transportfahrzeuge oder mit einem Wohnausbau als Freizeitfahrzeuge genutzt werden. Es handelt sich z.B. um Leichtlastwagen mit einem zulässigen Gesamtgewicht von 3,5 t oder mehr. Der Heckträger und insbesondere das Basisteil sind auch für andere Arten von Kraftfahrzeugen geeignet.

Das Basisteil hat in einer bevorzugten Ausführungsform eine Länge von ca. 1.500 mm bis 1.800 mm. Die Länge kann variabel sein. Das Basisteil und seine Länge können auch an die Art und die Abmessungen des Kraftfahrzeugs angepasst werden. Die Länge des Basisteils ist etwas geringer als die Fahrzeugbreite. Das Basisteil überdeckt in der Anbausituation die Fahrzeugmitte und erstreckt sich hiervon nach beiden Seiten hinaus, vorzugsweise bis zu mindestens einem Seitenrand, vorzugsweise beiden Seitenrändern, des Kraftfahrzeugs.

Der Grundträger und das Gehäuse des Basisteils können beide balkenartig ausgebildet sein und eine schlanke, störungsarme Bauform haben. Das Gehäuse kann in einer Betriebsstellung entlang des Grundträgers ausgerichtet sein, z.B. in Parallellage. In der Betriebsstellung ist das Basisteil am Fahrzeugheck angeordnet, wobei das Trägerteil am Basisteil montiert und abgenommen werden kann sowie der Fahrbetrieb des Kraftfahrzeugs mit und ohne Trägerteil aufgenommen werden kann.

Das Basisteil erstreckt sich in der Betriebsstellung quer zur Vorwärtsfahrtrichtung und bevorzugt mit zentrischer Ausrichtung entlang des Fahrzeughecks. Das Basisteil ist bevorzugt zentrisch zur Fahrzeugmitte ausgerichtet. Dies ist auch die Lage von Grundträger und Gehäuse in der Betriebsstellung. Das Gehäuse kann aus der Betriebsstellung mittels der besagten Lagerung am Grundträger in eine Freigabestellung oder Offenstellung bewegt werden, in welcher das Gehäuse mit den Stützarmen quer vom Grundträger absteht.

Das Gehäuse und der Grundträger können bei der besagten beweglichen Lagerung z.B. über ein Drehlager, drehbar miteinander verbunden sein. Ferner kann eine lösbare Fixierung vorhanden sein, die bei Bedarf mittels eines Schlosses absperrbar sein kann. Mittels der Fixierung kann das Gehäuse in der Betriebsstellung am Grundträger gehalten werden. Das Drehlager und die Fixierung können zu beiden Seiten der Stützarme und vorzugsweise an den gegenüberliegenden axialen Enden von Gehäuse und Grundträger angeordnet sein. Sie befinden sich dabei in der Nähe der hinteren Fahrzeugecken. Diese Anordnung ist vorteilhaft für ein störungsarmes und ansprechendes Aussehen des Basisteils in der Betriebsstellung und für eine weiträumige Freigabe des heckseitigen Fahrzeugzugangs. Im Bereich des Drehlagers kann ferner eine Verriegelung zwischen dem Grundträger und dem Gehäuse vorhanden sein, welche die Freigabe- oder Offenstellung sichert und ein unerwünschtes Zurückschwenken des Gehäuses durch Schwerkraft oder dgl. in die Betriebsstellung verhindert. Die Verriegelung kann bei entsprechender Gestaltung ggf. auch die eingeschwenkte Betriebsstellung zusätzlich sichern.

Das Gehäuse kann innerhalb des Grundträgers versenkt aufgenommen werden. Dies spart Platz und bietet eine hohe Stabilität von Grundträger und Gehäuse. Der Grundträger kann hierfür als angepasster und seitlich offener, bevorzugt gerader Profilkörper ausgebildet sein, der das in Parallellage versenkt aufgenommene Gehäuse zumindest bereichsweise umschließt.

Das Gehäuse weist zumindest im Bereich der Stützarme eine hohle Kasten- oder Rohrform auf. Vorzugsweise ist die hohle Kasten- oder Rohrform über die gesamte Gehäuselänge vorhanden. Im Bereich der hohlen Kasten- oder Rohrform weist das Gehäuse umfangseitig umlaufende Gehäusewände und eine ausschnittsweise Gehäuseöffnung an einer rückwärtigen Gehäusewand auf. Bei einer verkürzte Kasten- oder Rohrform kann sich z.B. die in Vorwärtsfahrtrichtung gesehen vordere Gehäusewand über den bevorzugt mittig angeordneten hinaus erstrecken. In der Betriebsstellung sind die Stützarme und der hohle Kasten- oder Rohrformbereich zumindest im Bereich der Fahrzeugmitte angeordnet.

Das Basisteil kann einen lösbaren Öffnungsverschluss für die Gehäuseöffnung umfassen. Der Öffnungsverschluss kann in unterschiedlicher Weise ausgebildet sein. In einer vorteilhaften Ausführungsform ist er als gebogener Deckel ausgebildet, der z.B. am Gehäuse formschlüssig eingehängt und in der Betriebsstellung durch zumindest partiellen Übergriff des Grundträgers gesichert werden kann.

Die Stützarme können jeweils ein Schwenklager aufweisen, das an der bodenseitigen und der dachseitigen Gehäusewand abgestützt ist. Dies ist eine besonders stabile Abstützung der in Gebrauchsstellung ausgeschwenkten Stützarme und der Last des dort aufgenommenen, insbesondere aufgesteckten, Trägerteils. Das Basisteil und die Schwenkarme können Lasten von 150 kg und mehr abstützen. Vorteilhaft ist eine schräg nach oben gerichtete Ausrichtung der Stützarme in der unbelasteten Stellung. Dies ist günstig für die Belastungsaufnahme sowie die Bodenfreiheit des aufgenommenen Trägerteils.

Die Stützarme können jeweils eine Rasteinrichtung zu ihrer Arretierung in der eingeschwenkten Nichtgebrauchsstellung im Gehäuse und der ausgeschwenkten Gebrauchsstellung aufweisen. Dies sichert die Einschwenkstellung im Fahrbetrieb und bietet einen hohen Bedienungskomfort beim lösbaren Montieren, insbesondere Anstecken, des Trägerteils.

Zur Komfortverbesserung kann das Basisteil einen Klapperschutz in Form von Federclips am eingehängten Deckel und/oder von Anlaufschrägen am Bodenbereich von Gehäuse und Grundträger aufweisen. Diese sind vor allem in der Betriebsstellung und im Fahrbetrieb des Kraftfahrzeugs wirksam.

Das Basisteil kann eine elektrische Energieversorgung mit Leitungen umfassen, die zur Elektrifizierung des aufgenommenen, insbesondere aufgesteckten Trägerteils und dessen elektrischer Komponenten genutzt werden kann. Hierfür kann z.B. beim Aufnehmen bzw. Anstecken des Trägerteils automatisch eine elektrische Steckverbindung geschlossen werden, wobei elektrische Steckteile an zumindest einem Stützarm und am Trägerteil angeordnet sind.

Der Hecklastenträger, insbesondere dessen Basisteil, kann auch eine Anhängerkupplung umfassen. Diese kann am Kraftfahrzeug oder am Grundträger montiert werden und ist vorteilhafterweise beweglich ausgebildet. Die Anhängerkupplung ist bevorzugt als Kugelkopfkupplung ausgebildet. Sie kann abnehmbar oder wegschwenkbar ausgebildet sein. In Betriebsstellung des Basisteils ragt der Kupplungshals mit der Kupplungskugel nach hinten über den Gehäuserand hinaus. Die Energieversorgung des Basisteils kann auch für die Anhängerkupplung genutzt werden.

Der Hecklastenträger kann außer dem Basisteil auch das besagte abnehmbare Trägerteil für eine Last umfassen. Das Trägerteil kann in unterschiedlicher Weise ausgebildet sein, z.B. als Fahrradträger, als Tragbox, Tragschiene oder dgl. Das Trägerteil kann auch einen bedarfsweise montierbaren Hilfsträger, z.B. für zusätzliche Fahrräder, umfassen. Das Trägerteil weist eine querversteifte Tragbrücke auf, die auf den in Gebrauchsstellung ausgeschwenkten Stützarmen montiert, insbesondere aufgesteckt werden kann. Der Verbund von Trägerteil und Stützarmen kann durch eine Verriegelung gesichert werden. Die Stützarme können hierfür entsprechend ausgebildet sein. Sie können Aufnahmeöffnungen für verschiebliche Riegelelemente der Verriegelung aufweisen. An der Tragbrücke können ein oder mehrere Lastaufnahmemittel lösbar montiert sein. Dies können z.B. Tragrinnen für Radreifen, Steckaufnahmen für eine Box oder dgl. sein.

In den Unteransprüchen sind weitere vorteilhafte Ausgestaltungen der Erfindung angegeben.

Der beanspruchte Hecklastenträger kann folgende weitere Ausgestaltungen aufweisen, die jeweils einzeln oder in beliebiger Kombination untereinander benutzt werden können.

Das Basisteil des Hecklastenträgers kann eine Länge von ca. 1.600 mm bis 1.800 mm aufweisen.

Der Grundträger des Hecklastenträgers kann Beschläge zur Montage an einem Kraftfahrzeug aufweist, die bevorzugt an den axialen Endbereichen des Grundträgers angeordnet sind.

Das Gehäuse des Basisteils und der Grundträger können über ein Drehlager und über eine lösbare, ggf. absperrbare, Fixierung sowie ggf. eine Verriegelung miteinander verbunden sein. Der Grundträger und das Gehäuse des Basisteils können im wesentlichen die gleiche Länge aufweisen, wobei das Drehlager und ggf. die Fixierung sowie ggf. die Verriegelung jeweils an einem axialen Endbereich der gemeinsamen Länge angeordnet sind.

Das Basisteil des Hecklastenträgers kann einen lösbaren Öffnungsverschluss für die Gehäuseöffnung umfassen. Ein Öffnungsverschluss für die Gehäuseöffnung kann als gebogener Deckel mit Deckelöffnungen ausgebildet sein, die an oberen Lagerbuchsen von Schwenklagern der Stützarme formschlüssig einhängbar sind und einen Klapperschutz mit Federclips aufnehmen, wobei der Deckel in versenkter Gehäusestellung vom Grundträger gesichert ist.

das Basisteil des Hecklastenträgers kann eine am Fahrzeugheck oder am Grundträger montierbare Anhängerkupplung umfassen, die abnehmbar oder wegschwenkbar ausgebildet sein kann.

Die Erfindung ist in den Zeichnungen beispielhaft und schematisch dargestellt. Im Einzelnen zeigen:
- Figur 1:: eine abgebrochene, perspektivische Heckansicht eines Kraftfahrzeugs mit einem Basisteil eines Hecklastenträgers in Betriebsstellung,
- Figur 2:: die Anordnung von Figur 1 mit einer Anhängerkupplung,
- Figur 3:: die Anordnung von Figur 1 mit in Gebrauchsstellung ausgeschwenkten Stützarmen des Basisteils,
- Figur 4:: die Anordnung von Figur 3 mit einem an den Stützarmen montierten Trägerteil in Form eines Fahrradträgers,
- Figur 5:: die Anordnung von Figur 4 in einer Freigabestellung des Basisteils mit freiem Zugang zum Fahrzeugheck,
- Figur 6:: eine Draufsicht auf die Anordnung von Figur 5,
- Figur 7 und 8:: Varianten des Trägerteils als Tragbox oder als Stützschiene für ein Motorrad,
- Figur 9:: eine perspektivische Ansicht des Basisteils mit Grundträger und Gehäuse in Betriebsstellung und die Nichtgebrauchsstellung von Stützarmen mit per Deckel verschlossener Gehäuseöffnung,
- Figur 10:: das Basisteil von Figur 9 mit abgenommenen Deckel und in Gebrauchsstellung ausgeschwenkten Stützarmen,
- Figur 11:: eine perspektivische Vorderansicht des Gehäuses mit entfernter Vorderwand,
- Figur 12:: eine perspektivische und geschnittene Draufsicht auf das Basisteil mit eingeschwenkten Stützarmen in Nichtgebrauchsstellung,
- Figur 13 und 14:: das Basisteil von Figur 9 in Frontansicht und Draufsicht,
- Figur 15:: eine Draufsicht auf das Basisteil von Figur 10 mit in Gebrauchsstellung ausgeschwenkten Stützarmen,
- Figur 16 und 17:: Seitenansichten des Basisteils von Figur 14 und 15,
- Figur 18:: eine perspektivische Ansicht des Basisteils mit Grundträger und Beschlägen sowie in Freigabestellung ausgeschwenktem Gehäuse,
- Figur 19:: eine perspektivische und abgebrochene Ansicht des Gehäuses mit Blick durch die Gehäuseöffnung auf die einschwenkten Stützarme,
- Figur 20:: eine teilweise abgebrochene und geschnittene perspektivische Ansicht der Stützarme und ihrer Schwenklager,
- Figur 21:: eine abgebrochene perspektivische Ansicht des Grundträgers und des Gehäuses in der versenkten Betriebsstellung mit einem transparent dargestellten Deckel und
- Figur 22:: eine Explosionsdarstellung des Basisteils und seiner Komponenten.

Die Erfindung betrifft einen Hecklastenträger (1) für ein Kraftfahrzeug (2) und außerdem das mit dem Hecklastenträger (1) ausgerüstete Kraftfahrzeug (2).

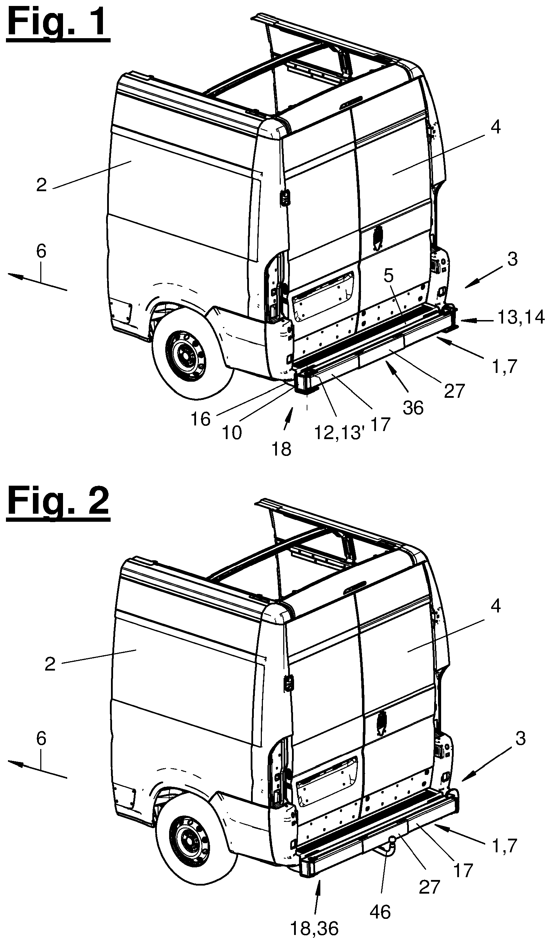

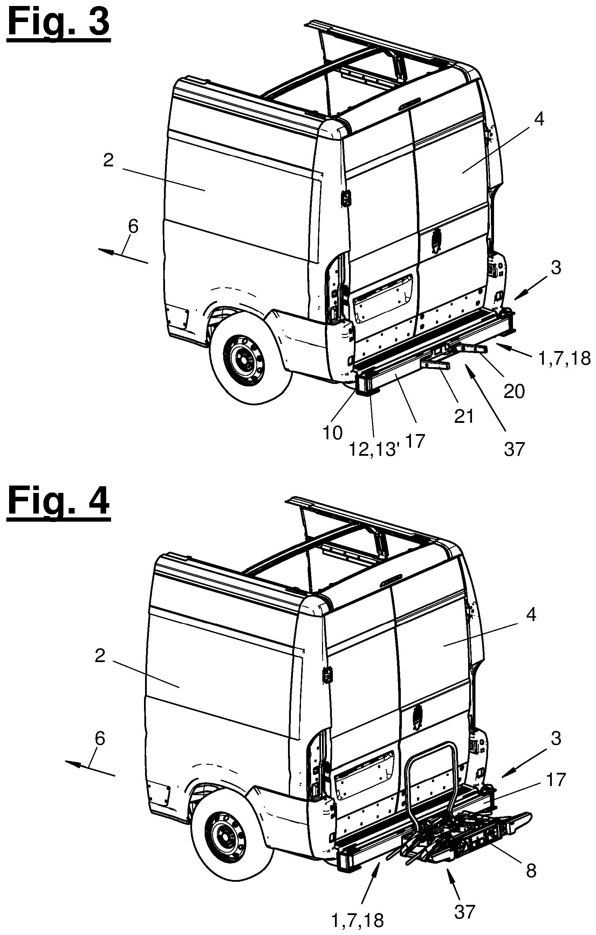

Figur 1 bis 8 zeigen ein Kraftfahrzeug (2) in Form eines Kastenwagens mit zwei Hecktüren (4). Die Vorwärtsfahrtrichtung (6) ist in den Figuren durch einen Pfeil angegeben. Das Kraftfahrzeug (2) weist ein Fahrzeugheck (3) auf, an dem ein Hecklastenträger (1) montierbar oder montiert ist. Der Hecklastenträger (1) umfasst zumindest ein Basisteil (7), welches am Fahrzeugheck (3) fest montierbar oder montiert ist. Der Hecklastenträger (1) kann darüber hinaus ein Trägerteil (8) umfassen, welches am Basisteil (7) lösbar, insbesondere angesteckt, werden kann. Das Trägerteil (8) ist in Figur 4 bis 8 in verschiedenen Ausführungsformen dargestellt.

Figur 1 zeigt das Kraftfahrzeug (2) mit dem fest angebauten Basisteil (7) ohne das abgenommene Trägerteil (8). Figur 2 zeigt die Anordnung von Figur 1 mit einer am Fahrzeugheck (3) montierten Anhängerkupplung (46). Die Anhängerkupplung (46) kann am Kraftfahrzeug (2) oder am Basisteil (7) montiert werden und ist vorzugsweise abnehmbar oder schwenkbar ausgebildet.

Das nachfolgend näher erläuterte Basisteil (7) besteht aus einem Grundträger (10) und einem beweglich, z.B. schwenkbar über ein Drehlager (12), am Grundträger (10) gelagerten Gehäuse (17), in dem schwenkbare Stützarme (20,21) angeordnet sind.

Figur 1 und 2 zeigen das angebaute Basisteil (7) in einer Betriebsstellung (18) am Fahrzeugheck (3) und in einer Nichtgebrauchstellung (36), in der die Stützarme (20,21) eingeschwenkt und im Gehäuse (17) verborgen aufgenommen sind. Figur 3 zeigt das Basisteil (7) in der Betriebsstellung (18) und in einer Gebrauchsstellung (37), in der die Stützarme (20,21) aus dem Gehäuse (17) ausgeschwenkt sind und entgegen der Fahrtrichtung (6) nach hinten vom Gehäuse (17) mit Parallelausrichtung abstehen. Auf den Stützarmen (20,21) kann das Trägerteil (8) montiert, insbesondere aufgesteckt, werden. Figur 4 bis 8 verdeutlichen diese Anordnung.

Gemäß Figur 1 und 2 erstreckt sich das am Kraftfahrzeug (2) angebaute Basisteil (7) quer zur Fahrtrichtung (6). Es ist z.B. zentrisch zur Fahrzeugmitte ausgerichtet. Insbesondere die Stützarme (20,21) sind zentrisch zur Fahrzeugmitte ausgerichtet. Das Basisteil (7) hat eine balkenartige, gerade und schlanke Form.

Das Basisteil (7) hat eine Länge, die etwas kleiner ist als die Fahrzeugbreite des Kraftfahrzeugs (2). Das Basisteil (7) hat z.B. eine Länge von ca. 1.600 mm bis 1.800 mm. Die Länge des Basisteils (7) kann an die Fahrzeugbreite angepasst sein und kann sich in Adaption an unterschiedliche Kraftfahrzeuge (2) und verschiedene Fahrzeugbreiten ändern. Das bevorzugte Längenmaß von ca. 1.600 mm bis 1.800 mm kann ein Standardmaß sein, das für die meisten Kastenwagen in Form von Vans, wie z.B. VW-Busse oder von Leichtlastwagen mit ca. 3,5 t oder mehr passend ist.

Der Grundträger (10) und das Gehäuse (17) haben z.B. im Wesentlichen die gleiche Länge. Sie sind in der Betriebsstellung (18) in Parallellage angeordnet, wobei das schwenkbar gelagerte Gehäuse (17) im Grundträger (10) zumindest teilweise versenkt aufgenommen werden kann. Der Grundträger (10) kann mittels Beschlägen (16) am Kraftfahrzeug (2) befestigt werden.

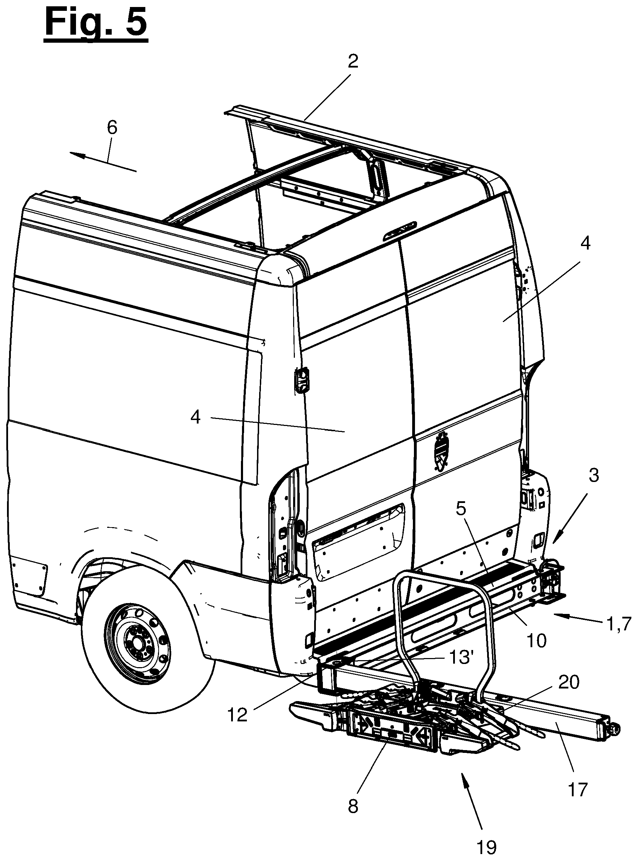

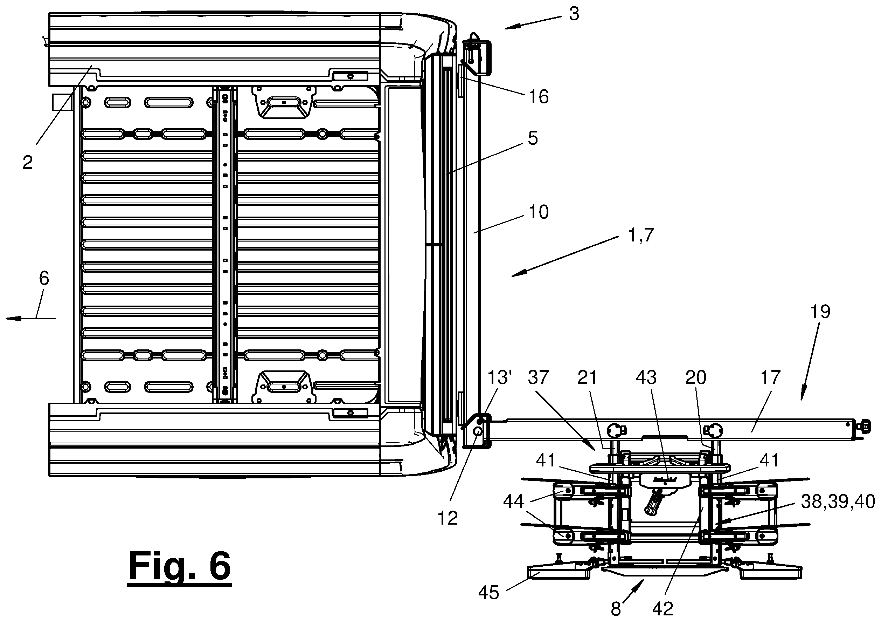

Das Gehäuse (17) kann bedarfsweise aus der Betriebsstellung (18) mittels des Drehlagers (12) in eine Freigabestellung (19) gedreht und dabei mit den Stützarmen (20,21) und einem evtl. montierten Trägerteil (8) vom Fahrzeugheck (3) wegbewegt werden. Figur 5 und 6 zeigen die Freigabestellung (19) oder Öffnungsstellung, in welcher das Gehäuse (17) auch vom Grundträger (10) weggedreht ist.

Der Drehwinkel des Gehäuses (17) kann z.B. 90° betragen. In der Freigabestellung (19) sind das Fahrzeugheck (3) und die Hecktüren (4) frei zugänglich und können ungehindert geöffnet und geschlossen werden. In der Freigabestellung (19) kann das Kraftfahrzeug (2) vom Fahrzeugheck (3) aus beladen und entladen werden.

Wie Figur 1 bis 8 verdeutlichen, weist das Kraftfahrzeug (2) am Fahrzeugheck (3) einen Heckstoßfänger (5) auf, der z.B. als rückwärtige Stoßstange oder als Trittbrett für einen Heckzugang ausgebildet ist. Das Basisteil (7) ist in den gezeigten Ausführungsformen entgegen der Vorwärtsfahrtrichtung (6) hinter dem Heckstoßfänger (5) angeordnet. Die Oberseiten von Heckstoßfänger (5) und Basisteil (7) können im Wesentlichen bündig ausgerichtet sein.

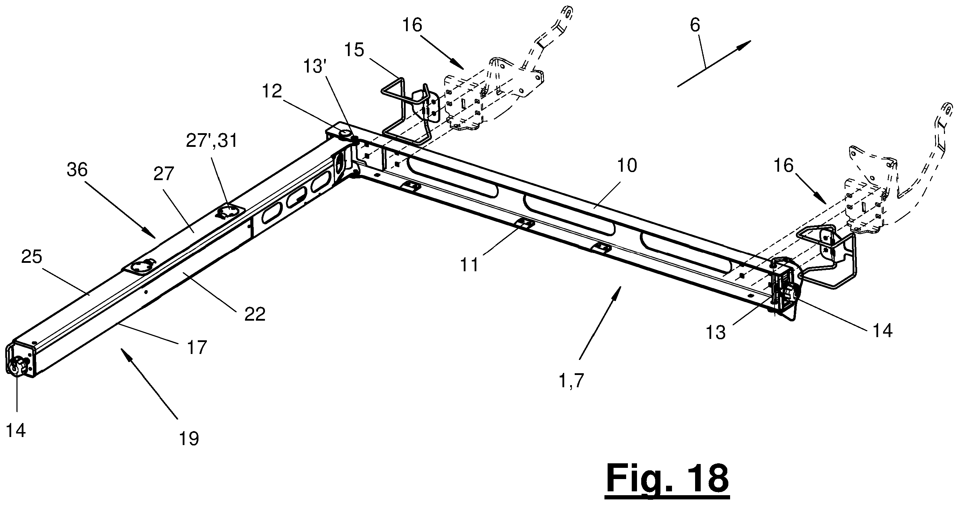

Die bevorzugt endseitigen Beschläge (16) des Basisteils (7), insbesondere Grundträgers (10), sind entsprechend angeordnet und können mit geeigneten Anbaustellen am Kraftfahrzeug (2), z.B. mit den rückwärtigen Enden von Fahrzeuglängsträgern, fest verbunden werden. In Figur 18 ist diese Befestigung angedeutet.

Mit den vorgenannten und bevorzugten Abmessungen und Ausrichtungen des Basisteils (7) und seiner Komponenten befindet sich das vorzugsweise endseitig am Grundträger (10) angeordnete Drehlager (12) nahe am benachbarten Seitenrand bzw. der hinteren Ecke des Kraftfahrzeugs (2). Dies ist günstig für den in Figur 6 gezeigten freien Heckzugang in der Freigabestellung (19). Das Gehäuse (17) kann sich dabei längs der Vorwärtsrichtung (6) erstrecken.

In einer anderen und nicht dargestellten Ausführungsform kann das Basisteil (7) unterhalb eines Heckstoßfängers (5) angeordnet sein. In einer weiteren Variante kann das Basisteil (7) auch einen Heckstoßfänger (5) ersetzen und an dessen Stelle angeordnet sein. Dies kann an die jeweilige Ausbildung des Kraftfahrzeugs (2) adaptiert werden.

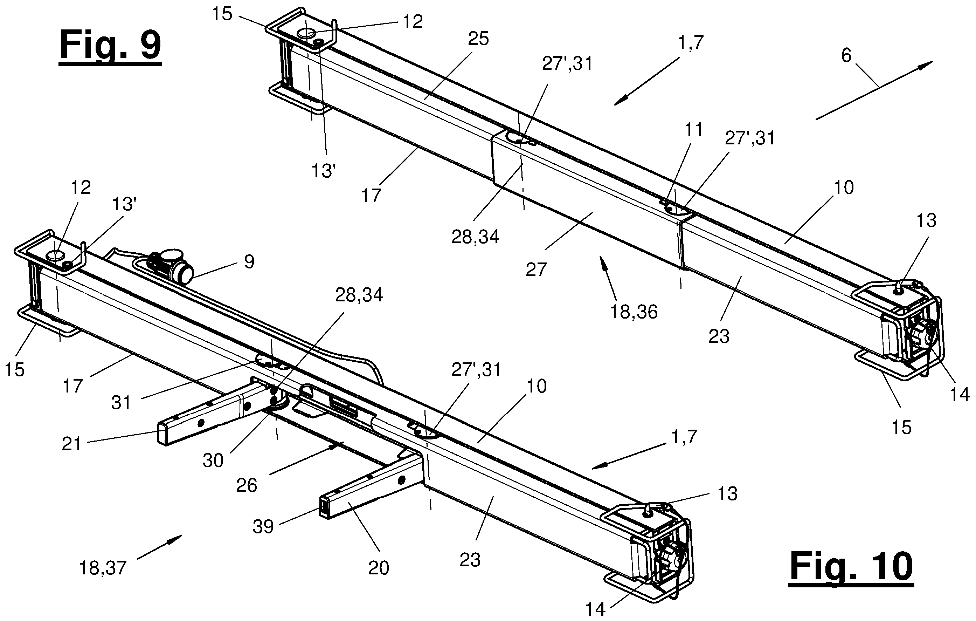

Figur 9 bis 22 verdeutlichen eine bevorzugte Ausführungsform des Basisteils (7).

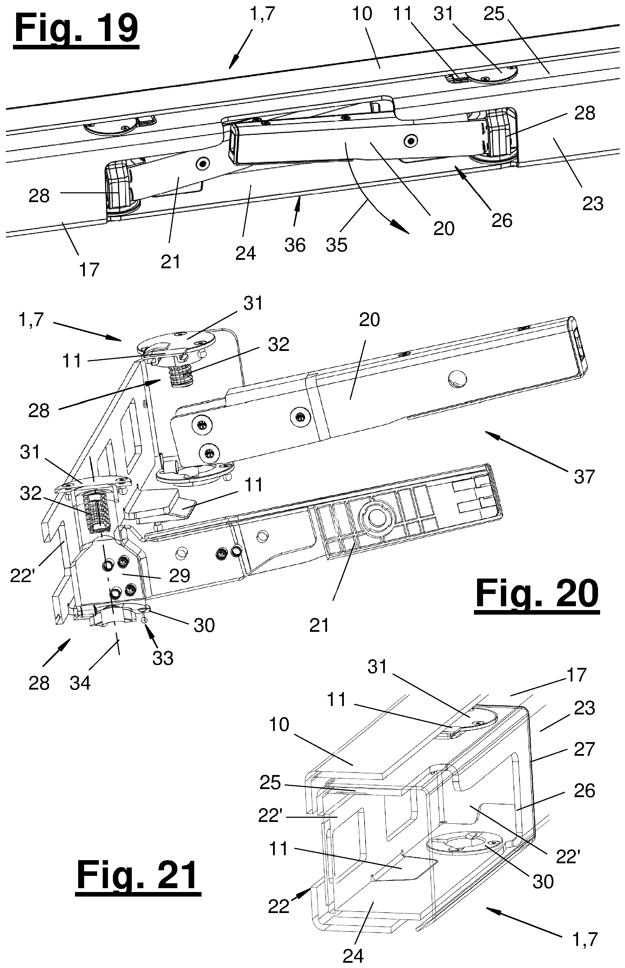

Das Gehäuse (17) hat eine bevorzugt über seine ganze Länge vorhandene hohle Kastenform und weist Gehäusewände (22-25) auf, die den inneren Hohlraum umfangseitig umgeben. Ferner sind Stirnwände vorhanden. Figur 21 zeigt diese Gestaltung.

In der Anbau- und Betriebsstellung am Kraftfahrzeug (2) ist die Gehäusewand (23) entgegen der Fahrtrichtung (6) hinten angeordnet und bildet eine Rückwand. An der gegenüberliegenden Seite ist eine Vorderwand (22) angeordnet. Ferner sind untere und obere Boden- und Dachwände (24,25) vorhanden. Das Gehäuse (17) hat im Querschnitt bei dieser Ausführungsform eine im Wesentlichen rechteckige Form.

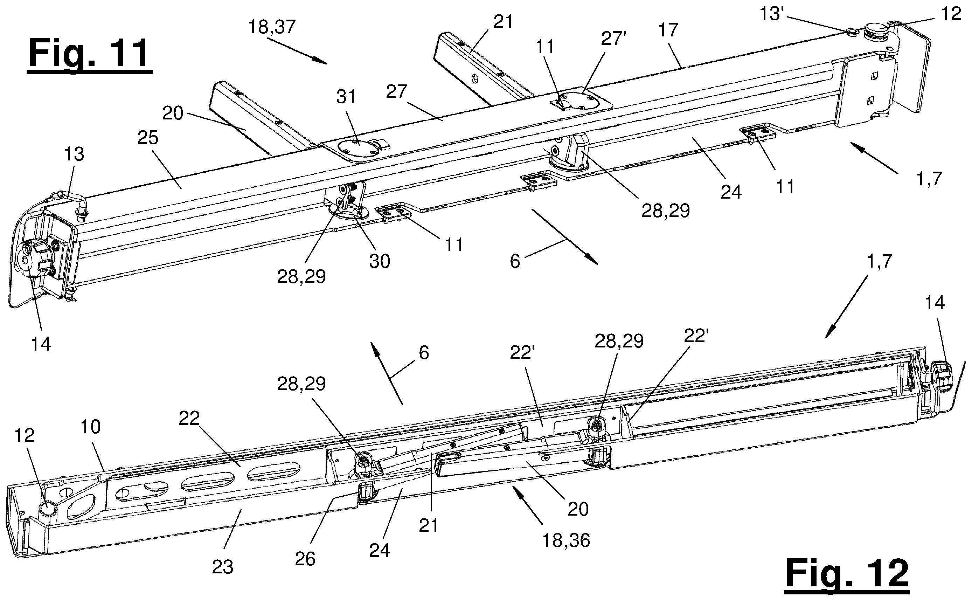

Die Rückwand (23), der Boden (24) und das Dach (25) können einstückig unter Bildung eines im Querschnitt U- oder C-förmigen Gehäuseprofils miteinander verbunden sein. Die Vorderwand (22) kann von Randflanschen des Gehäuseprofils und weiteren Wandteilen oder Blenden gebildet sein. Im Bereich der Stützarme (20,21) kann ein das Gehäuse (17) versteifender und die Stützarme (20,21) vorn und seitlich umgreifender U-förmiger Stützkörper (22') fest angeordnet und befestigt sein gemäß Figur 12, 20 und 21. Der Stützkörper (22') kann ein Wandteil der Vorderwand (22) bilden.

An der Rückwand (23) ist eine Gehäuseöffnung (26) angeordnet, die z.B. als Ausschnitt in der ansonsten bevorzugt massiven Gehäusewand (23) ausgebildet ist. Durch die Gehäuseöffnung (26) können die Stützarme (20,21) in die in Figur 10 gezeigte Gebrauchsstellung (37) in einer bevorzugt horizontalen Schwenkbewegung (35) ausschwenken. Figur 9 zeigt die eingeschwenkte Nichtgebrauchsstellung, in der die Stützarme (20,21) verborgen im hohlen Innenraum des Gehäuses (17) angeordnet sind. Figur 12 und 19 verdeutlichen diese Nichtgebrauchsstellung (36), in der die Stützarme (20,21) auf gleicher Höhe und in Fahrtrichtung (6) hintereinander angeordnet sind.

In der Nichtgebrauchsstellung (36) kann die Gehäuseöffnung (26) mit einem Öffnungsverschluss (27) temporär verschlossen werden. In den gezeigten Ausführungsbeispielen ist der Öffnungsverschluss (27) als z.B. L-förmig gebogener Deckel ausgebildet, der am Gehäuse (17) eingehängt und mit Formschluss gehalten werden kann. Der Deckel kann in der in Figur 9 gezeigten Betriebsstellung (18) vom Grundträger (10) übergriffen und in seiner Lage gesichert werden.

Das Basisteil (7) weist an einem axialen Ende das erwähnte Drehlager (12) auf. Dessen Lagerachse ist quer zur Längserstreckung von Grundträger (10) und Gehäuse (17) ausgerichtet. In der Betriebsstellung (18) am Kraftfahrzeug (2) ist die Drehachse aufrecht, insbesondere vertikal, ausgerichtet. Das Drehlager (12) kann z.B. als einfaches Bolzenlager gem. Figur 12 ausgebildet sein.

Am anderen axialen Ende des Basisteils (7) ist eine Fixierung (13) angeordnet, mit welcher das Gehäuse (17) in der Betriebsstellung (18) am Grundträger (10) festgehalten und gesichert werden kann. Die Fixierung (13) wird z.B. von einem Steckbolzen gebildet, der durch fluchtende Aufnahmeöffnungen an Ober- und Unterseite von Grundträger (10) und Gehäuse (17) durchgesteckt werden kann und als Riegel wirkt. Ferner kann an der Fixierung (13) ein Schloss (14) angeordnet sein, welches einen abnehmbaren und drehbaren Schlosskopf und einen an der Stirnseite des Gehäuses (17) angeordneten Schlossstift umfassen kann. Der abnehmbare Schlosskopf kann in einer außenseitigen Vertiefung an einer Stirnwand des Grundträgers (10) lösbar aufgenommen werden, wobei der Schlossstift beide Stirnwände von Grundträger (10) und Gehäuse (17) durchsetzt.

Im Bereich des Drehlagers (12) kann eine Verriegelung (13') zwischen dem Grundträger (10) und dem Gehäuse (17) vorhanden sein, welche die Freigabe- oder Offenstellung (19) sichert und ein unerwünschtes Zurückschwenken des Gehäuses (17) in die Betriebsstellung (18) verhindert. Die Verriegelung (13') kann z.B. als mechanische Absteckung ausgebildet sein.

An den beiden axialen Enden des Basisteils (7) können außerdem Stützbügel (15) montiert sein, welche einen Anschlagschutz bieten und über die Außenkonturen an den Endbereichen von Grundträger (10) und Gehäuse (17) überstehen.

Der Grundträger (10) ist als seitlich offener, gerader Profilkörper ausgebildet, der gemäß Figur 9 das Gehäuse (17) in Parallellage versenkt aufnehmen und zumindest bereichsweise umschließen kann. Figur 18 zeigt den offenen Profilkörper mit der entgegen der Fahrtrichtung (6) nach hinten weisenden Trägeröffnung zur Aufnahme des in Figur 18 noch ausgeschwenkten Gehäuses (17). Der Grundträger (10) und Profilkörper haben z.B. einen U-förmigen Querschnitt, in dem das Gehäuse (17) in der Parallellage und in der Betriebsstellung (18) gemäß Figur 9 zumindest teilweise versenkt aufgenommen werden kann. Die Ober- und Unterseiten des Grundträgers (10) übergreifen dabei zumindest teilweise den Boden (24) und das Dach (25) des Gehäuses (17). Sie übergreifen dabei auch den oberen abgekanteten Rand des Deckels (27).

Die Stützarme (20,21) sind in Längsrichtung des Basisteils (7) auf gleicher Höhe und mit seitlichem Abstand nebeneinander angeordnet. Sie weisen jeweils ein Schwenklager (28) auf. Dieses ist vorzugsweise am Boden (24) und am Dach (25) des Gehäuses (17) abgestützt. In den gezeigten Ausführungsbeispielen haben die Stützarme (20,21) an ihrem einen Ende einen aufrechten Lagerschaft (29), der im Gehäuse (17) angeordnet und mit seinen Schaftenden in Lagerbuchsen (30,31) am Boden (24) und am Dach (25) aufgenommen ist. Der Lagerschaft (29) des Stützarms (20) ist in Figur 11 und 20 der Übersicht halber nicht dargestellt. Mittels einer an einem Schaftende eingesetzten Feder (32) kann das Drehlager (28) vorgespannt werden. Die Drehlager (28) haben in der Anbaustellung am Kraftfahrzeug (2) eine aufrechte, insbesondere vertikale, Lagerachse (34).

Die Stützarme (20,21), insbesondere Drehlager (28), weisen außerdem eine Rasteinrichtung (33) auf, mit welcher der jeweilige Stützarm (20,21) in der ausgeschwenkten Gebrauchsstellung (37) und in der eingeschwenkten Nichtgebrauchsstellung (36) arretiert werden kann. Die Rastelemente sind z.B. als federbelastete Kugeln oder Bolzen und hierzu passende Aufnahmeöffnungen ausgebildet, die z.B. wechselweise am Lagerschaft (29) und an einer Lagerbuchse (30) angeordnet sein können.

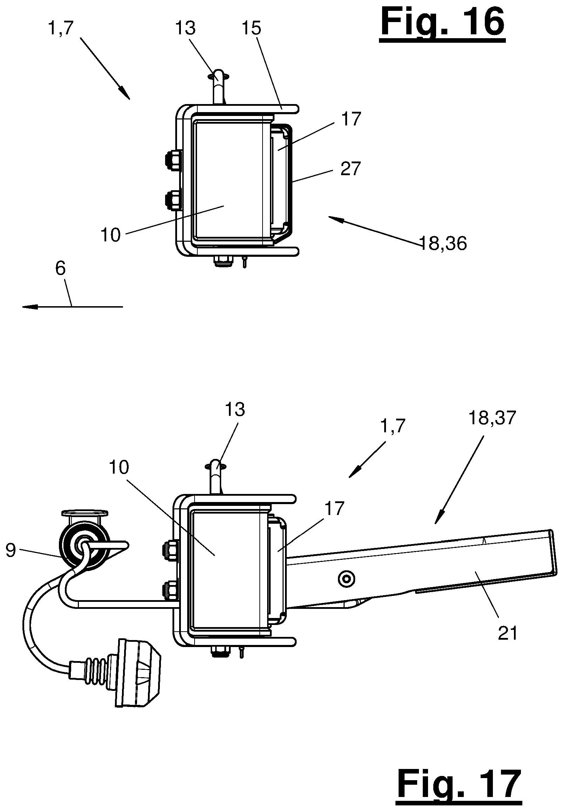

Die Stützarme (20,21) haben eine vom aufrechten Lagerschaft (29) ausgehende vorzugsweise gerade Erstreckung. Sie können dabei gemäß Figur 17 und 19 schräg nach oben gerichtet sein. Die Stützarme (20,21) können mehrteilig ausgebildet sein und können z.B. aus inneren Stützkörpern und einer außenseitigen Manschette bestehen.

Die oberen Lagerbuchsen (31) können zur formschlüssigen Befestigung des Deckels (27) dienen. Sie weisen z.B. einen kreisrunden oberen Buchsenboden auf, der auf dem Dach (25) des Gehäuses (17) aufliegt. Der Deckel (27) kann entsprechend geformte Deckelöffnungen (27') aufweisen, mit denen er über die Lagerbuchsen (31) gesteckt und formschlüssig gehalten werden kann.

Das Basisteil (7) kann einen Klapperschutz (11) aufweisen. Dieser kann von ein oder mehreren Teilen gebildet werden. Ein Klapperschutz (11) kann z.B. für den eingehängten Deckel (27) vorgesehen sein. Er kann von Federclipsen gebildet werden, die am Deckel (7) fixiert werden können und die sich am Dach (25) und der Oberwand des Grundträgers (10) in der Schließstellung federnd anlegen. Die Deckelöffnung (27') kann zu diesem Zweck eine schlüssellochartige Form aufweisen, wobei die Federclipse in dem schmalen Öffnungsfortsatz eingesteckt werden können.

Ein Klapperschutz (11) kann auch zwischen dem Gehäuse (17) und dem Grundträger (10) vorhanden sein und kann in der Parallellage und der Betriebsstellung (18) wirken. Wie Figur 18 und 20 verdeutlichen, kann der Klapperschutz (11) von keilförmigen Auflaufschrägen an der Unterwand des Grundträgers (10) gebildet werden, auf denen der Boden (24) des Gehäuses (17) beim Einschwenken in die Betriebsstellung (18) aufgleitet und abgestützt wird.

Das Basisteil (7) kann eine elektrische Energieversorgung (9) umfassen, die z.B. mit dem Bordnetz des Kraftfahrzeugs (2) verbunden werden kann. Die Energieversorgung (9) kann in unterschiedlicher Weise ausgebildet sein.

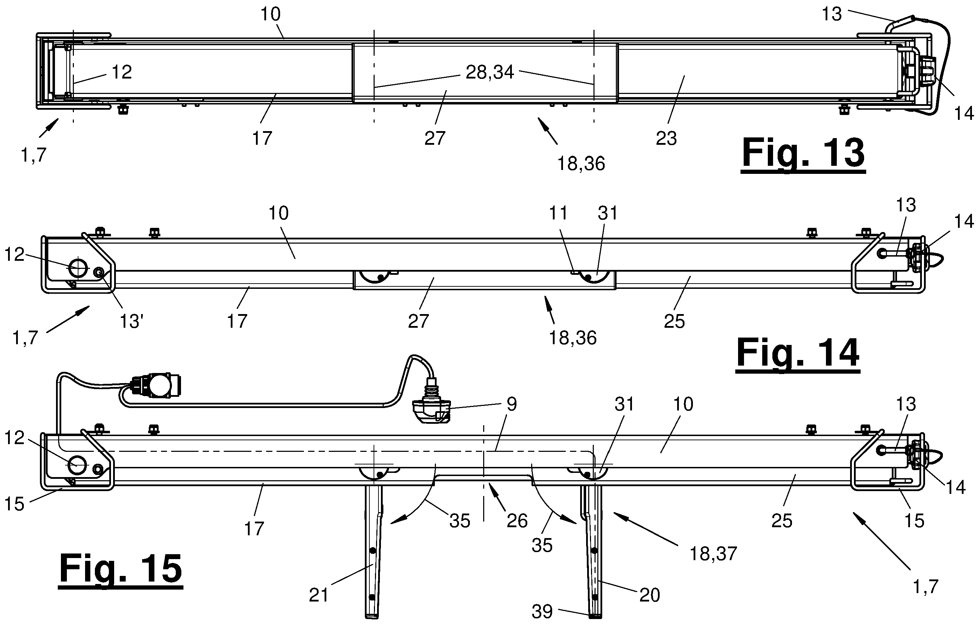

Sie kann z.B. in Figur 15 gezeigte Leitungen umfassen, die innerhalb des Basisteils (7), insbesondere innerhalb des Gehäuses (17) und zumindest eines Stützarms (20) verlegt sind. Der mit der Leitung versehene Stützarm (20) kann an seinem freien stirnseitigen Ende ein Steckteil (39) für eine elektrische Steckverbindung (38) aufweisen, die beim Anbauen, insbesondere Anstecken, des Trägerteils (8) automatisch geschlossen werden kann. Das Steckteil (39) ist z.B. als Steckdose ausgebildet. Am Trägerteil (8) kann ein damit zusammenwirkendes Steckteil (40), z.B. ein Stecker, angeordnet sein. Über die Steckverbindung (38) können elektrische Verbraucher, z.B. Rückleuchten, Blinker, Bremslicht, evtl. elektrische Antrieb etc. des Trägerteils (8) versorgt werden.

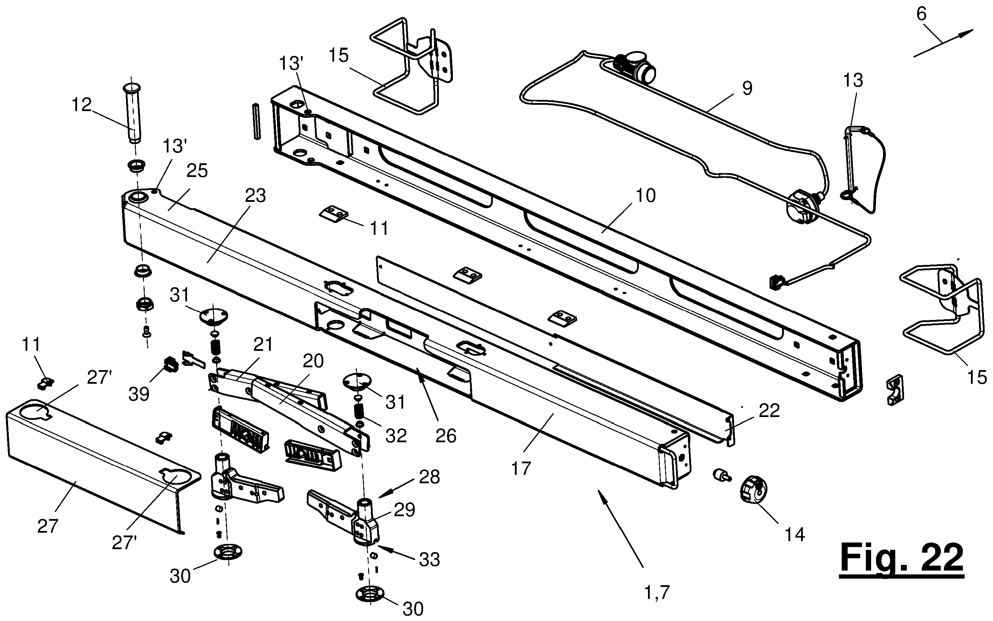

Die elektrische Energieversorgung (9) kann auch eine in Figur 15 und 22 darstellte Steckdose umfassen, die an geeigneter Stelle am Kraftfahrzeug (2) oder am Basisteil (7) befestigt werden kann. Die Steckdose kann alternativ zur Elektroversorgung des Trägerteils (8) benutzt werden, wobei am Trägerteil (8) ein entsprechender Stecker mit Kabel angeordnet ist. Die Steckdose kann auch zusammen mit der Anhängerkupplung (46) für die Stromversorgung eines Anhängers benutzt werden.

Das Trägerteil (8) kann in unterschiedlicher Weise ausgebildet sein, wobei Figur 5 bis 8 verschiedene Gestaltungsmöglichkeiten zeigen.

Figur 6 verdeutlicht in der Draufsicht eine bevorzugte Ausführungsform des Trägerteils (8). Dieses umfasst eine quer versteifte Tragbrücke (42), die parallele Armaufnahmen (41) aufweist, welche zum Aufsetzen oder Aufstecken auf die in Gebrauchsstellung (37) ausgeschwenkten Stützarme (20,21) ausgebildet sind. Die Armaufnahmen (41) können z.B. eine rohrförmige oder manschettenförmige Gestalt haben. Sie sind z.B. an der Unterseite der Tragbrücke (42) angeordnet, die ansonsten mit Querträgern versteift sein kann.

Das Trägerteil (8) kann ferner eine z.B. manuell bedienbare Verriegelung (43) aufweisen, mit der das Trägerteil (8) an den Stützarmen (20,21) in der Montage- oder Steckstellung verriegelt werden kann. Hierfür können z.B. verschiebliche Riegelelemente an der Tragbrücke (42) und entsprechende Aufnahmeöffnungen an den Stützarmen (20,21) vorhanden sein.

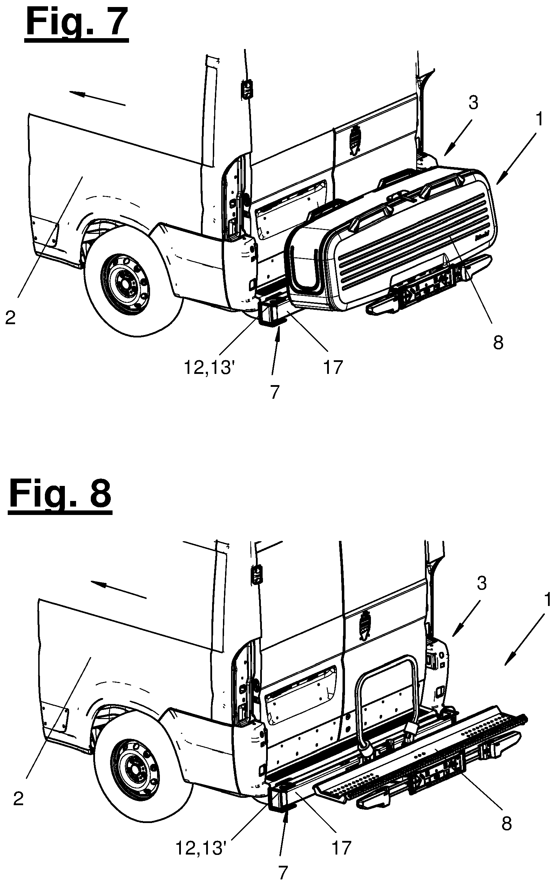

Das Trägerteil (8) kann ferner einen starren oder klappbaren oder ausziehbaren Leuchtenträger (45) umfassen, der mit der elektrischen Energieversorgung (9) verbindbar ist. Ferner können ein oder mehrere Lastaufnahmemittel (44) vorhanden sein. Diese sind z.B. bei einem Fahrradträger als Aufnahmerinnen und Spannverschlüsse für die Räder bzw. Reifen ausgebildet. Ein anderes Lastaufnahmemittel (44) kann als Boxaufnahme für eine in Figur 7 gezeigte Tragbox ausbildet sein. Ein Lastaufnahmemittel (44) kann auch zur Aufnahme einer in Figur 8 gezeigten Tragrinne für ein Kraftrad oder dgl. dienen. Das Trägerteil (8) kann ansonsten weitere Komponenten, wie Stütz- und Tragbügel, Fixiereinrichtungen und dgl. umfassen.

Abwandlungen der gezeigten und beschriebenen Ausführungsformen sind in verschiedener Weise möglich.

Der Öffnungsverschluss (27) kann in anderer Weise, z.B. als Klappdeckel, Jalousie, Roll- oder Faltblende, ausgebildet sein. Er kann Gehäuse (17) befestigt sein.

Der hohle Rohr- oder Kastenformbereich des Gehäuses (17) kann nur stellenweise und im Bereich der Stützarme (20,21) vorhanden sein, wobei z.B. die rückwärtigen, oberen und unteren Gehäusewände (23,24,25) eine entsprechend verkürzte Länge haben und die Vorderwand (22) eine größere Länge besitzt, wobei sie sich flanschartig nach beiden Seiten erstreckt und mit dem Drehlager (12) und der Fixierung (13) verbunden ist.

In einer anderen Abwandlung kann das Basisteil (7) asymmetrisch zur Fahrzeugmitte in der Betriebsstellung (18) angeordnet sein. Hierbei kann es mit einem axialen Ende bis zum Seitenrand bzw. einer hinteren Ecke des Kraftfahrzeugs reichen und sich mit dem anderen axialen Ende über die Fahrzeugmitte hinaus erstrecken. Das Drehlager (12) kann an dem eckennahen Ende des Basisteils (7) angeordnet sein.

In einer weiteren Abwandlung kann statt des Drehlagers (12) eine andere Bewegungsmechanik und -kinematik eingesetzt werden, um das Gehäuse (17) aus der Betriebsstellung (18) in eine Freigabestellung (19) bewegen zu können.

Ansonsten können die einzelnen Merkmale der vorbeschriebenen Ausführungsformen und der genannten Varianten und Abwandlungen im Rahmen der Ansprüche miteinander kombiniert und auch vertauscht werden.

### BEZUGSZEICHENLISTE

- 1: Hecklastenträger
- 2: Kraftfahrzeug
- 3: Fahrzeugheck
- 4: Hecktüre, Heckklappe
- 5: Heckstoßstange
- 6: Vorwärtsfahrtrichtung
- 7: Basisteil
- 8: Trägerteil, Fahrradträger, Tragbox
- 9: Energieversorgung
- 10: Grundträger
- 11: Klapperschutz
- 12: Drehlager
- 13: Fixierung
- 13': Verriegelung
- 14: Schloss
- 15: Schutzbügel
- 16: Beschlag
- 17: Gehäuse
- 18: Betriebsstellung
- 19: Freigabestellung
- 20: Stützarm
- 21: Stützarm
- 22: Gehäusewand, Vorderwand
- 22': Stützkörper
- 23: Gehäusewand, Rückwand
- 24: Gehäusewand, Boden
- 25: Gehäusewand, Dach
- 26: Gehäuseöffnung
- 27: Öffnungsverschluss, Deckel
- 27': Deckelöffnung
- 28: Schwenklager
- 29: Lagerschaft
- 30: Lagerbuchse
- 31: Lagerbuchse
- 32: Feder
- 33: Rasteinrichtung
- 34: Lagerachse
- 35: Schwenkbewegung
- 36: Nichtgebrauchsstellung
- 37: Gebrauchsstellung
- 38: Steckverbindung
- 39: Steckteil, Steckdose
- 40: Steckteil, Stecker
- 41: Armaufnahme
- 42: Tragbrücke
- 43: Verriegelung
- 44: Lastaufnahmemittel, Räderaufnahme, Boxaufnahme
- 45: Leuchtenträger
- 46: Anhängerkupplung

## Patentansprüche

1. Hecklastenträger für ein Kraftfahrzeug (2), insbesondere einen Kastenwagen mit einer Hecktüre oder Hecklappe (4), wobei der Hecklastenträger (1) ein längliches Basisteil (7) mit einem Gehäuse (17) und mit mehreren, insbesondere zwei, im Gehäuse (17) angeordneten, seitlich beabstandeten und schwenkbaren Stützarmen (20,21) aufweist, wobei das Basisteil (7) für eine feste und quer zu einer Vorwärtsfahrtrichtung (6) gerichtete Anordnung am Fahrzeugheck (3) des Kraftfahrzeugs (2) ausgebildet ist und wobei die schwenkbaren Stützarme (20,21) für die lösbare Befestigung eines abnehmbaren und auf den Stützarmen (20,21) aufzusteckenden Trägerteils (8) ausgebildet sind und zwischen einer eingeklappten Nichtgebrauchsstellung (36) im Gehäuse (17) und einer ausgeklappten Gebrauchsstellung (37) schwenkbar sind, wobei die Stützarme (20,21) in der Gebrauchsstellung (37) gegen die Vorwärtsfahrtrichtung (6) rückwärts aus dem Gehäuse (17) ragen, wobei das Gehäuse (17) des Basisteils (7) an der Rückseite eine verschließbare Gehäuseöffnung (26) aufweist, durch welche die Stützarme (20,21) aus dem Gehäuse (17) in einer Schwenkbewegung (35) in die Gebrauchsstellung (37) schwenken können, **dadurch**
**gekennzeichnet, dass** das Basisteil (7) einen am Kraftfahrzeug (2) fest montierbaren Grundträger (10) aufweist, an dem das Gehäuse (17) mit den darin angeordneten Stützarmen (20,21) beweglich, insbesondere schwenkbar, gelagert ist, wobei die Stützarme (20,21) in der Nichtgebrauchsstellung (36) im Gehäuse (17) auf gleicher Höhe und in Fahrtrichtung (6) hintereinander angeordnet sind.

2. Hecklastenträger nach Anspruch 1, **dadurch gekennzeichnet, dass** das Basisteil (7) eine balkenartige, bevorzugt gerade Form aufweist und für eine Anordnung am Kraftfahrzeug (2) im Bereich unterhalb oder entgegen der Vorwärtsfahrtrichtung (6) hinter einem Heckstoßfänger (5) des Kraftfahrzeugs (2) oder an Stelle des Heckstoßfängers (5) ausgebildet ist.

3. Hecklastenträger nach Anspruch 1 oder 2, **dadurch gekennzeichnet, dass** das Gehäuse (17) balkenartig ausgebildet und derart beweglich am balkenartigen Grundträger (10) gelagert ist, dass das Gehäuse (17) aus einer Betriebsstellung (18) mit Ausrichtung entlang des Grundträgers (10) in eine Freigabestellung (19) bewegbar ist, in welcher das Gehäuse (17) quer vom Grundträger (10) absteht.

4. Hecklastenträger nach einem der vorhergehenden Ansprüche, **dadurch gekennzeichnet, dass** das Gehäuse (17) und der Grundträger (10) über ein Drehlager (12) und über eine lösbare, ggf. absperrbare, Fixierung (13) sowie ggf. eine Verriegelung (13') verbunden sind.

5. Hecklastenträger nach einem der vorhergehenden Ansprüche, **dadurch gekennzeichnet, dass** der Grundträger (10) als ein angepasster seitlich offener, bevorzugt gerader Profilkörper ausgebildet ist, der das Gehäuse (17) in Parallellage versenkt aufnehmen und zumindest bereichsweise umschließen kann.

6. Hecklastenträger nach einem der vorhergehenden Ansprüche, **dadurch gekennzeichnet, dass** das Gehäuse (17) zumindest im Bereich der Stützarme (20,21) eine hohle Kasten- oder Rohrform mit umfangseitigen umlaufenden Gehäusewänden (22-25) und einer ausschnittsweise Gehäuseöffnung (26) an einer rückwärtigen Gehäusewand (23) aufweist.

7. Hecklastenträger nach Anspruch 6, **dadurch gekennzeichnet, dass** in der Betriebsstellung die Stützarme (20,21) und der hohle Kasten- oder Rohrformbereich zumindest im Bereich der Fahrzeugmitte angeordnet sind.

8. Hecklastenträger nach einem der vorhergehenden Ansprüche, **dadurch gekennzeichnet, dass** die Stützarme (20,21) jeweils ein Schwenklager (28) aufweisen, das an einer bodenseitigen und einer dachseitigen Gehäusewand (24,25) abgestützt ist.

9. Hecklastenträger nach einem der vorhergehenden Ansprüche, **dadurch gekennzeichnet, dass** die Stützarme (20,21) jeweils eine Rasteinrichtung (33) zu ihrer Arretierung in der eingeschwenkten Nichtgebrauchsstellung (36) im Gehäuse (17) und der ausgeschwenkten Gebrauchsstellung (37) aufweisen.

10. Hecklastenträger nach einem der vorhergehenden Ansprüche, **dadurch gekennzeichnet, dass** das Basisteil (7) eine elektrische Energieversorgung (9) mit Leitungen umfasst, wobei an zumindest einem Stützarm (20,21) ein elektrisches Steckteil (39) angeordnet ist, das zur Bildung einer elektrischen Steckverbindung (38) mit einem elektrischen Steckteil (40) an einem an den Stützarmen (20,21) aufgenommenen Trägerteil (8) ausgebildet ist.

11. Hecklastenträger nach einem der vorhergehenden Ansprüche, **dadurch gekennzeichnet, dass** das die Stützarme (20,21) dazu ausgebildet sind, dass der Verbund von Trägerteil (8) und Stützarmen (20,21) durch eine Verriegelung (43) sicherbar ist.

12. Hecklastenträger nach einem der vorhergehenden Ansprüche, **dadurch gekennzeichnet, dass** der Hecklastenträger (1) ein vom Basisteil (7) abnehmbares Trägerteil (8) für eine Last umfasst, wobei das Trägerteil (8) eine auf die Stützarme (20,21) in Gebrauchsstellung (37) lösbar montierbare, insbesondere aufsteckbare, Tragbrücke (42) mit einer Verriegelung (43) und mit einem an der Tragbrücke (42) bevorzugt lösbar angeordneten Lastaufnahmemittel (44) aufweist.

13. Hecklastenträger nach Anspruch 12, **dadurch gekennzeichnet, dass** mit der z.B. manuell bedienbaren Verriegelung (43) das Trägerteil (8) an den Stützarmen (20,21) in der Montage- oder Steckstellung verriegelbar ist, wobei z.B. verschiebliche Riegelelemente an der Tragbrücke (42) und entsprechende Aufnahmeöffnungen an den Stützarmen (20,21) vorhanden sind.

14. Hecklastenträger nach einem der vorhergehenden Ansprüche, **dadurch gekennzeichnet, dass** das Basisteil (7) eine am Fahrzeugheck oder am Grundträger (10) montierbare Anhängerkupplung (46) umfasst, die abnehmbar oder wegschwenkbar ausgebildet sein kann.

15. Kraftfahrzeug (2), insbesondere Kastenwagen mit einer Hecktüre oder Hecklappe (4), mit einem Hecklastenträger (1), der ein längliches Basisteil (7) mit einem Gehäuse (17) und mit mehreren, insbesondere zwei, darin angeordneten, seitlich beabstandeten und schwenkbaren Stützarmen (20,21) aufweist, wobei das Basisteil (7) fest und quer zu einer Vorwärtsfahrtrichtung (6) gerichtet am Fahrzeugheck (3) des Kraftfahrzeugs (2) angeordnet ist und wobei die schwenkbaren Stützarme (20,21) für die lösbare Befestigung eines abnehmbaren Trägerteils (8) ausgebildet sind und zwischen einer eingeklappten Nichtgebrauchsstellung (36) im Gehäuse (17) und einer ausgeklappten Gebrauchsstellung (37) schwenkbar sind, wobei die Stützarme (20,21) in der Gebrauchsstellung (37) gegen die Vorwärtsfahrtrichtung (6) rückwärts aus dem Gehäuse (17) ragen, **dadurch gekennzeichnet, dass** der Hecklastenträger (1) nach mindestens einem der Ansprüche 1 bis 14 ausgebildet ist.

## Claims

1. Rear load carrier for a motor vehicle (2), in particular a panel van with a rear door or tailgate (4), wherein the rear load carrier (1) has an elongate base part (7) with a housing (17) and with a plurality of, in particular two, laterally spaced-apart, pivotable support arms (20,21) which are disposed in the housing (17), wherein the base part (7) is designed for a fixed arrangement directed transversely to a forward travel direction (6), at the rear (3) of the motor vehicle (2), and wherein the pivotable support arms (20,21) are designed for the releasable fastening of a removable carrier part (8) to be attached to the support arms (20,21), and are pivotable between a retracted non-use position (36) in the housing (17) and a deployed use position (37), wherein the support arms (20,21) in the use position (37) extend rearwards from the housing (17), counter to the forward travel direction (6), wherein the housing (17) of the base part (7) at the rear has a closable housing opening (26) by way of which the support arms (20,21) can pivot in a pivoting movement (35) out of the housing (17) to the use position (37), **characterized in that** the base part (7) has a base support (10) which is able to be fixedly assembled on the motor vehicle (2) and on which the housing (17) with the support arms (20,21) disposed therein is movably, in particular pivotably, mounted, wherein the support arms (20,21) in the non-use position (36) are disposed in the housing (17) at the same height and behind one another in the direction of travel (6).

2. Rear load carrier according to Claim 1, **characterized in that** the base part (7) has a beam-like, preferably straight shape and is designed for an arrangement on the motor vehicle (2) in the region below, or counter to, the forward travel direction (6) behind a rear bumper (5) of the motor vehicle (2), or in place of the rear bumper (5).

3. Rear load carrier according to Claim 1 or 2, **characterized in that** the housing (17) is formed in a beam-like manner and is mounted so as to be movable on the beam-like base support (10) in such a manner that the housing (17) is movable from an operating position (18) with alignment along the base support (10) to a release position (19) in which the housing (17) projects transversely from the base support (10).

4. Rear load carrier according to one of the preceding claims, **characterized in that** the housing (17) and the base support (10) are connected by a rotary bearing (12) and by way of a releasable, optionally lockable, fixing (13) and optionally a locking mechanism (13').

5. Rear load carrier according to one of the preceding claims, **characterized in that** the base support (10) is formed as an adapted laterally open, preferably straight profile member which can receive the housing (17) so as to be recessed in a parallel position and at least partially enclose the latter.

6. Rear load carrier according to one of the preceding claims, **characterized in that** the housing (17) has, at least in the region of the support arms (20,21), a hollow box or tubular shape with circumferentially encircling housing walls (22-25) and in parts a housing opening (26) on a rear housing wall (23).

7. Rear load carrier according to Claim 6, **characterized in that** in the operating position the support arms (20,21) and the hollow box- or tubular-shaped region are disposed at least in the region of the centre of the vehicle.

8. Rear load carrier according to one of the preceding claims, **characterized in that** the support arms (20,21) each have a pivot bearing (28) which is supported on a floor-proximal and a roof-proximal housing wall (24,25).

9. Rear load carrier according to one of the preceding claims, **characterized in that** the support arms (20,21) each have a latching device (33) for locking them in the inwardly pivoted non-use position (36) in the housing (17) and the outwardly pivoted use position (37).

10. Rear load carrier according to one of the preceding claims, **characterized in that** the base part (7) comprises an electrical power supply (9) with lines, wherein disposed on at least one support arm (20,21) is an electrical plug-in part (39) which is designed to form an electrical plug connection (38) to an electrical plug-in part (40) on a carrier part (8) received on the support arms (20,21).

11. Rear load carrier according to one of the preceding claims, **characterized in that** the support arms (20,21) are designed in such a way that the entity of carrier part (8) and support arms (20,21) is able to be secured by a locking mechanism (43).

12. Rear load carrier according to one of the preceding claims, **characterized in that** the rear load carrier (1) comprises a carrier part (8) for a load, which is removable from the base part (7), wherein the carrier part (8) has a support bridge (42) which is able to be releasably assembled on, in particular attached to, the support arms (20,21) in the use position (37), and has a locking mechanism (43) and has a load receptacle means (44) that is preferably releasably disposed on the support bridge (42).

13. Rear load carrier according to Claim 12, **characterized in that**, by way of the e.g. manually operable locking mechanism (43), the carrier part (8) is able to be locked to the support arms (20,21) in the assembling or plugging position, wherein there are e.g. displaceable locking elements on the support bridge (42) and corresponding receptacle openings on the support arms (20,21).

14. Rear load carrier according to one of the preceding claims, **characterized in that** the base part (7) comprises a trailer coupling (46) which is able to be assembled on the rear of the vehicle, or on the base support (10), and which can be designed to be removable or pivotable out of the way.

15. Motor vehicle (2), in particular panel van with a rear door or tailgate (4), having a rear load carrier (1) which has an elongate base part (7) with a housing (17) and with a plurality of, in particular two, laterally spaced-apart, pivotable support arms (20,21) which are disposed therein, wherein the base part (7) is fixedly arranged and aligned transversely to a forward travel direction (6), at the rear (3) of the motor vehicle (2), and wherein the pivotable support arms (20,21) are designed for the releasable fastening of a removable carrier part (8), and are pivotable between a retracted non-use position (36) in the housing (17) and a deployed use position (37), wherein the support arms (20,21) in the use position (37) extend rearwards from the housing (17), counter to the forward travel direction (6), **characterized in that** the rear load carrier (1) is designed according to at least one of Claims 1 to 14.

## Revendications

1. Porte-charge arrière pour un véhicule automobile (2), notamment une camionnette pourvue d'une porte arrière ou un hayon (4), le porte-charge arrière (1) possédant une partie de base (7) allongée avec un boîtier (17) et plusieurs, notamment deux, bras de support (20, 21) disposés dans le boîtier (17), espacés latéralement et pivotants, la partie de base (7) étant configurée pour une disposition en position fixe et transversalement par rapport à une direction de marche avant (6) à l'arrière de véhicule (3) du véhicule automobile (2), et les bras de support (20, 21) pivotants étant configurés pour la fixation amovible d'une partie porteuse (8) amovible et à enficher sur les bras de support (20, 21) et pouvant pivoter entre une position de non-utilisation (36), repliés dans le boîtier (17), et une position d'utilisation (37), déployés, les bras de support (20, 21) dans la position d'utilisation (37) faisant saillie vers l'arrière hors du boîtier (17) à l'opposé de la direction de marche avant (6), le boîtier (17) de la partie de base (7) possédant du côté arrière une ouverture de boîtier (26) pouvant être fermée, à travers laquelle les bras de support (20, 21) peuvent pivoter hors du boîtier (17) dans un mouvement de pivotement (35) vers la position d'utilisation (37), **caractérisé en ce que** la partie de base (7) possède un élément porteur de base (10) pouvant être monté à demeure sur le véhicule automobile (2), sur lequel le boîtier (17), avec les bras de support (20, 21) disposés à l'intérieur de celui-ci, est monté mobile, notamment de manière pivotante, les bras de support (20, 21) dans la position de non-utilisation (36) étant disposés dans le boîtier (17) à la même hauteur et les uns derrière les autres dans le sens de la marche (6).

2. Porte-charge arrière selon la revendication 1, **caractérisé en ce que** la partie de base (7) présente une forme en poutre, de préférence droite, et est configurée pour une disposition sur le véhicule automobile (2) dans la zone située sous ou à l'opposé de la direction de marche avant (6), derrière un pare-chocs arrière (5) du véhicule automobile (2) ou à la place du pare-chocs arrière (5).

3. Porte-charge arrière selon la revendication 1 ou 2, **caractérisé en ce que** le boîtier (17) est configuré à la manière d'une poutre et est monté mobile sur l'élément porteur de base (10) en forme de poutre de telle sorte que le boîtier (17) peut être déplacé d'une position de fonctionnement (18) alignée le long de l'élément porteur de base (10) vers une position de dégagement (19), dans laquelle le boîtier (17) fait saillie transversalement par rapport à l'élément porteur de base (10).

4. Porte-charge arrière selon l'une des revendications précédentes, **caractérisé en ce que** le boîtier (17) et l'élément porteur de base (10) sont reliés par le biais d'un palier pivotant (12) et par le biais d'un dispositif de calage (13), éventuellement verrouillable, ainsi que, le cas échéant, par un dispositif de verrouillage (13').

5. Porte-charge arrière selon l'une des revendications précédentes, **caractérisé en ce que** l'élément porteur de base (10) est réalisé sous la forme d'un corps profilé adapté, ouvert latéralement, de préférence droit, qui peut accueillir le boîtier (17) noyé en position parallèle et l'entourer au moins partiellement.

6. Porte-charge arrière selon l'une des revendications précédentes, **caractérisé en ce que** le boîtier (17) présente, au moins dans la zone des bras de support (20, 21), une forme creuse en caisson ou en tube avec des parois de boîtier (22-25) circonférentielles du côté de la périphérie et une ouverture de boîtier (26) par portions au niveau d'une paroi arrière de boîtier (23).

7. Porte-bagages arrière selon la revendication 6, **caractérisé en ce que**, en position de fonctionnement, les bras de support (20, 21) et la zone creuse en forme de caisson ou de tube sont disposés au moins dans la zone du centre du véhicule.

8. Porte-charge arrière selon l'une des revendications précédentes, **caractérisé en ce que** les bras de support (20, 21) possèdent respectivement un palier pivotant (28) qui s'appuie sur une paroi de boîtier (24, 25) côté sol et une côté toit.

9. Porte-charge arrière selon l'une des revendications précédentes, **caractérisé en ce que** les bras de support (20, 21) possèdent respectivement un dispositif d'encliquetage (33) destiné à leur blocage dans la position de non-utilisation (36) repliée dans le boîtier (17) et dans la position d'utilisation (37) déployée.

10. Porte-charge arrière selon l'une des revendications précédentes, **caractérisé en ce que** la partie de base (7) comporte une alimentation en énergie électrique (9) avec des câbles, une fiche électrique (39) étant disposée au niveau d'au moins un bras de support (20, 21), laquelle est configurée pour former une connexion électrique par enfichage (38) avec une fiche électrique (40) au niveau d'une partie porteuse (8) logée au niveau des bras de support (20, 21).

11. Porte-charge arrière selon l'une des revendications précédentes, **caractérisé en ce que** les bras de support (20, 21) sont configurés de telle sorte que l'assemblage de la partie porteuse (8) et des bras de support (20, 21) peut être sécurisé par un verrouillage (43).

12. Porte-charge arrière selon l'une des revendications précédentes, **caractérisé en ce que** le porte-charge arrière (1) comporte une partie porteuse (8) amovible de la partie de base (7) pour une charge, la partie porteuse (8) possédant un pont porteur (42) pouvant être monté de manière amovible, notamment enfichable, sur les bras de support (20, 21) en position d'utilisation (37), pourvu d'un verrouillage (43) et comprenant un moyen de réception de charge (44) disposé de préférence de manière amovible sur le pont porteur (42).

13. Porte-charge arrière selon la revendication 12, **caractérisé en ce que** la partie porteuse (8) peut être verrouillée aux bras de support (20, 21) dans la position de montage ou d'enfichage avec le verrouillage (43), actionnable par exemple manuellement, des éléments de verrouillage déplaçables, par exemple, étant présents au niveau du pont porteur (42) et des ouvertures de réception correspondantes au niveau des bras de support (20, 21).

14. Porte-charge arrière selon l'une des revendications précédentes, **caractérisé en ce que** la partie de base (7) comporte un attelage de remorque (46) pouvant être monté à l'arrière du véhicule ou sur l'élément porteur de base (10), lequel peut être configuré amovible ou escamotable.

15. Véhicule automobile (2), notamment une camionnette pourvue d'une porte arrière ou d'un hayon (4), comprenant un porte-charge arrière (1) qui possède une partie de base allongée (7) avec un boîtier (17) et comprenant plusieurs, notamment deux, bras de support (20, 21) disposés dans celui-ci, espacés latéralement et pivotants, la partie de base (7) étant disposée en position fixe et transversalement par rapport à une direction de marche avant (6) à l'arrière de véhicule (3) du véhicule automobile (2) et les bras de support (20, 21) pivotants étant configurés pour la fixation amovible d'une partie porteuse (8) amovible et pouvant pivoter entre une position de non-utilisation (36), repliés dans le boîtier (17), et une position d'utilisation (37), déployés, les bras de support (20, 21) dans la position d'utilisation (37) faisant saillie vers l'arrière hors du boîtier (17) à l'opposé de la direction de marche avant (6), **caractérisé en ce que** le porte-charge arrière (1) est configuré selon au moins l'une des revendications 1 à 14.
